# EUROPEAN PATENT SPECIFICATION

(11) **EP 2 318 457 B1**
(45) Date of publication and mention of the grant of the patent: **04.04.2012**
(21) Application number: 09782246.4
(22) Date of filing: 27.08.2009
(51) Int. Cl.: C08L 23/10, C08K 13/02, C08K 5/3492, C08K 5/01, C08K 3/22

(54) **FLAME RETARDANT POLYOLEFIN COMPOSITION**
FLAMMWIDRIGE POLYOLEFINZUSAMMENSETZUNG
COMPOSITION IGNIFUGE DE POLYOLÉFINES

(30) Priority: 29.08.2008 EP 08163287; 08.10.2008 US 103852 P
(43) Date of publication of application: 11.05.2011
(73) Proprietor: Akzo Nobel N.V., 6824 BM Arnhem (NL)
(72) Inventor: HOGT, Andreas Herman, NL-7523 AB Enschede (NL); SPIJKERMAN, Geesje Klasina, NL-7421 AS Deventer (NL); TONNAER, Haimo, NL-7425 HK Deventer (NL)
(74) Representative: Alferink, Petrus J.T.
(86) International application number: PCT/EP2009/061032
(87) International publication number: WO 2010/023236

(56) References cited:
- EP-A- 1 239 005
- EP-A- 1 632 525
- WO-A-2004/041919
- GB-A- 2 373 507

## Description

The present invention relates to a flame retardant polyolefin composition, a method for improving the flame retardancy of a polyolefin, and a masterbarch that can be used to increase the flame retardancy of a polyolefin.

Combustion is almost exclusively a gas-phase phenomenon. Hence, in order for a solid to burn it must be volatilized. In the case of polymeric compounds, this means that they must be decomposed, thereby producing gaseous or liquid low molecular weight products. These products may then act as fuel, causing further decomposition.

Flame retardants are generally added to polymers in order to interrupt this cycle. Brominated flame retardants, for instance, are believed to dissociate into radical species that compete with chain propagating and branching steps in the combustion process (A.G. Marck, "Flame retardants, halogenated" in Kirk Othmer Encyclopedia of Chemical Technology, Vol. 11, pp. 455-456, published online on September 17, 2004).

The flammability of polymers is generally tested according to the Underwriters Laboratory UL 94 Standard for Safety. This UL 94 test measures the ignitability of plastics using a small flame. According to this test, test specimens of a defined size are mounted vertically and ignited using a Bunsen burner. A layer of cotton is placed under the test specimen to test for flaming drips. The flame is applied for 10 seconds. In short, a V-0 rating is obtained if no specimen burns for longer than 10 seconds after flame application and the cotton cannot be ignited; a V-1 rating is obtained if no specimen burns for longer than 30 seconds and the cotton cannot be ignited; and a V-2 rating is obtained if no specimen burns for longer than 30 seconds and the cotton can be ignited.

Brominated organic compounds are commonly blended with a synergist, such as Sb₂O₃ or zinc borate, in order to further reduce the flammability and, hence, to get a better UL94 rating.

The use of large amounts of such synergists is undesired, however, because they are generally white and high loadings of synergist thus complicate colouring of the end products.

In order to reduce the amount of synergist, it is known to add a free radical initiator, such as an organic peroxide or C-C initiator.

For instance, GB 2,085,898 discloses a composition containing a polyolefin, an aromatic bromohydrocarbon - more in particular decabromodiphenyloxide - as flame retardant, 2.5 phr Sb₂O₃ as a synergist, and a C-C initiator. V-0 ratings are not obtained with the samples disclosed in this document.

The compositions disclosed in EP 0 200 217 and 0 154 946 contain polypropylene, melamine bromohydrate as flame retardant, and 2,5-diphenyl-2,3-dimethyl butane (a C-C initiator), and/or a synergist such as Sb₂O₃. Only with very large amounts of antimony oxide (10 wt%) is a V-0 rating obtained. GB 1,270,318 discloses polypropylene compositions comprising the flame retardant 1,2,4,6,79,10-hexabromocyclododecane, the synergist Sb₂O₃, an alkane polyol (e.g. pentaerythritol), and the C-C initiator dicumyl. No information is given in this document concerning the extent of flame retardancy of these compositions.

US 3,850,882 discloses polypropylene compositions comprising penta-bromotoluene or hexabromobiphenyl as flame retardant in combination with C-C initiator bicumyl and either stannic oxide or Sb₂O₃ as synergist.

EP 1 239 005 discloses a composition comprising a polyolefin, tris(tribromoneopentyl phosphate, and a free radical source. However, V-0 ratings were only obtained when the composition additionally contained high amounts (at least about 4 pbw) of Sb₂O₃.

It has now been found that it is possible to obtain V-0 ratings with amounts of synergist which are significantly lower than those used in the prior art.

The composition according to the present invention comprises at least one polyolefin, a brominated flame retardant, a free radical initiator, and 0.1-0.5 phr (= per hundred resin) of a synergist selected from the group consisting of antimony compounds, tin compounds, molybdenum compounds, zirconium compounds, boron compounds, and zinc compounds. The free radical initiator is selected from the group consisting of organic peroxides and C-C initiators.

Examples of suitable polyolefins include homo- and copolymers obtained from one or more of the monomers propylene, ethylene, butene, isobutylene, pentene, hexene, heptene, octene, 2-methyl propene, 2-methyl butene, 4-methyl pentene, 4-methyl hexene, 5-methyl hexene, bicyclo (2,2,1)-2-heptene, butadiene, pentadiene, hexadiene, isoprene, 2,3-dimethyl butadiene, 3,1-methyl pentadiene 1,3,4-vinyl cyclohexene, vinyl cyclohexene, cyclopentadiene, styrene and methyl styrene. Preferred polyolefins are polypropylene and polyethylene, including atactic, syndiotactic, and isotactic polypropylene, low density polyethylene, high density polyethylene, linear low density polyethylene, block copolymers of ethylene and propylene, and random copolymers of ethylene and propylene. The most preferred polyolefin is polypropylene.

The composition may contain only one homo- or copolymer, but may also contain homopolymer blends, copolymer blends, and homopolymer-copolymer blends. The polyolefin may be of a moulding grade, fibre grade, film grade or extrusion grade.

The brominated flame retardants are selected from the group consisting of tetrabromobisphenol A bis (2,3-dibromopropyl either), hexabromocyclododecane, poly(pentabromobenzyl acrylate), decabromodiphenyl oxide, tris (tribromophenyl) cyanurate, tris-dibromopropyl isocyanurate, and mixtures thereof.

The amount of brominated flame retardant in the composition according to the present invention preferably is at least 0.5 phr (= per hundred resin), more preferably at least 1 phr, and most preferably at least 2 phr. The amount of brominated flame retardant in the composition preferably is not higher than 20 phr, more preferably not higher than 10 phr, and most preferably not higher than 8 phr.

Suitable free radical initiators are organic peroxides and C-C initiators. Preferably, the free radical initiator has a 0.1 hour half life temperature of at least 130°C, more preferably at least 150°C, and most preferably above 155°C.

Examples of suitable organic peroxides are peroxyketals such as 1,1-di(tert.butylperoxy)-3,3,5-trimethylcyclohexane, 1,1-di(t-butylperoxy)cyclohexane, 1,1-Di(tert-amylperoxy)cyclohexane, 2,2-di(t-butylperoxy)butane, and butyl 4,4-di(tert-butylperoxy)valerate, peroxymonocarbonates such as t-amylperoxy-2-ethylhexyl carbonate, t-butylperoxy isopropyl carbonate, or t-butylperoxy 2-ethylhexyl carbonate, dialkyl peroxides, such as di-t-amyl peroxide, dicumyl peroxide, di(t-butylperoxyisopropyl)benzene, 2,5-dimethyl-2,5-di(t-butylperoxy)hexane, t-butyl cumyl peroxide, 2,5-dimethyl-2,5-di(t-butylperoxy)hexyne-3, or di-t-butyl peroxide, peroxyesters such as tert-amyl peroxyacetate, t-butyl peroxy-3,5,5-trimethylhexanoate, tert-amyl peroxybenzoate, t-butyl peroxyacetate or t-butyl peroxybenzoate, hydroperoxides such as hexylene glycol hydroperoxide, isopropylcumyl hydroperoxide, 1,1,3,3-tetramethylbutyl hydroperoxide, 1,3-diisopropylbenzene monohydroperoxide, cumyl hydroperoxide, t-butyl hydroperoxide, or tert-amyl hydroperoxide, trioxepanes as disclosed in WO 2006/066984 such as di(3,5,7,7-tetramethyl-1,2,4 trioxepane-3-yl)methane, and cyclic ketone peroxides as disclosed in WO 96/03444 such as 3,6,9-triethyl-3,6,9-trimethyl-1,4,7-triperoxonane.

Examples of suitable C-C initiators are 2,3-dimethyl-2,3-diphenyl-butane, 2,3-dimethyl-2,3-diphenyl-hexane and poly-1 ,4-diisopropyl benzene.

The most preferred free radical initiator for use in the composition according to the present invention is a C-C initiator, of which 2,3-dimethyl-2,3-diphenylbutane is the most preferred.

The free radical initiator is preferably present in the composition according to the invention in an amount of at least 0.05 phr, more preferably at least 0.1 phr, even more preferably at least 0.25 phr, and most preferably more than 0.5 phr. The amount of free radical initiator in the composition preferably is not higher than 2 phr and more preferably not higher than 1.5 phr.

The composition according to the present invention additionally comprises a so-called synergist, i.e. a compound different from the free radical initiator and allowing the amount of brominated flame retardant to be reduced, thus leading to a lower amount of bromine in the composition, which makes the composition more economic. However, only small amounts of synergist are used in the composition according to the invention.

The synergist is present in the composition according to the present invention in amounts of more than 0.1 phr to not more than 0.5 phr, preferably less than 0.5 phr, more preferably not more than 0.4 phr, and most preferably not more than 0.3 phr.

The synergist is an inorganic metal compound selected from the group consisting of antimony compounds (e.g. antimony trioxide, antimony tetraoxide, antimony pentaoxide, and/or sodium antimonate), tin compounds (e.g. tin oxide, tin hydroxide, and/or dibutyl tin maleate), molybdenum compounds (e.g. molybdenum oxide, ammonium molybdate), zirconium compounds (e.g. zirconium oxide and/or zirconium hydroxide), boron compounds (e.g. zinc borate and/or barium metaborate), zinc compounds such as zinc stannate, and mixtures of two or more of these compounds.

The most preferred synergist is antimony trioxide.

The composition according to the present invention may further comprise additional additives which are known in the art such as ultraviolet and light stabilizers (e.g. hindered amine light stabilizers (HALS) or HALS that are alkoxyamine-functional hindered amines (NOR-HALS)), UV screeners (e.g. TiO₂), UV absorbers (e.g. benzotriazole or benzophenone), release agents, lubricants, colorants, plasticizers, fillers (e.g. talc, calcium carbonate, mica, carbon black), fibre reinforcements (e.g. glass fibres or carbon fibres), blowing agents, heat stabilizers, antioxidants, impact modifiers, processing aids, and additives to improve the electrical conductivity of the compounds.

Due to its very stable and good mechanical properties, the composition according to the present invention may be used in many applications. Nonlimiting examples of such applications are fibres for textiles, carpets, upholstery, injection products such as stadium seats, electrical parts (connectors, disconnectors and sockets), and electrical appliances, extrusion products such as profiles, pipes, construction panels, sheets for roofing, films and boards for packaging and industry, insulation for cables and electric wires.

### EXAMPLES

Examples 1-7 and comparative Examples A-LCompositions according to the invention (samples 1-7) and comparative compositions (samples A-L) were prepared using a polypropylene homopolymer (homo-PP) or an ethylenepropylene co-polymer (co-PP) with a melt flow index of 3 g/10 min, tris-dibromopropyl isocyanurate (FR-930), 2,3-dimethyl-2,3-diphenyl-butane (Perkadox®; Px 30), antimony trioxide, and zinc borate, in the amounts (in phr) given in Table 1. The samples were prepared using a mixing chamber of 50 cm³ at 180°C. PP was molten first before adding the other components. A total mixing time of 15 minutes was allowed. The prepared samples were compression moulded at 200°C into sheets of 2 mm thickness. From these sheets, samples for UL94 tests were prepared.

The results of the UL94 flammability test of 2.0 mm specimens (average over 5 tests) of these compositions are also indicated in Table 1.

This data shows that the addition of quite small amounts of synergist can improve the flame retardancy of polyolefin compositions containing flame retardant and free radical initiator. The addition of just 0.25 phr antimony trioxide already resulted in a V-0 rating. Also, the addition of just 0.25 zinc borate reduced the flammability of the composition enormously.

**Table 1**

| sample | Polymer | | FR-930 | synergist | | Px 30 | Total Burning time(s) | Av. burning time(s) | rating |
|---|---|---|---|---|---|---|---|---|---|
| | homo-PP | co-PP | | Sb₂O₃ | Zn borate | | | | |
| A | 100 | | | | | | | | NR |
| B | 100 | | 2 | | | | | | NR |
| C | 100 | | 2 | 1 | | | | | V-2 |
| D | 100 | | 4 | 1 | | | 16 | 3.2 | V-2 |
| E | 100 | | 4 | 2 | | | 1 | 0.2 | V-0 |
| F | 100 | | 2 | | | 1 | | | V-2 |
| 1 | 100 | | 2 | 0.5 | | 1 | 0 | 0.0 | V-0 |
| G | 100 | | 4 | | | 1 | 6 | 1.2 | V-2 |
| H | 100 | | 4 | | | 2 | 3 | 0.6 | V-2 |
| I | 100 | | 4 | | | 3 | | | V-2 |
| 2 | 100 | | 4 | 0.5 | | 1 | 0 | 0.0 | V-0 |
| 3 | 100 | | 4 | 0.25 | | 1 | 4 | 0.8 | V-0 |
| J | 100 | | 4 | 0.1 | | 1 | 11 | 2.2 | V-2 |
| K | 100 | | 4 | | 1 | | >300 | >50 | NR |
| L | 100 | | 4 | | 2 | | >300 | >50 | NR |
| 4 | 100 | | 4 | | 0.5 | 1 | 5 | 1.0 | V-2 |
| 5 | 100 | | 4 | | 0.25 | 1 | 7 | 1.4 | V-2 |
| 6 | | 100 | 8 | 0.5 | | 1 | 0 | 0.0 | V-0 |
| 7 | | 100 | 8 | 0.5 | | 0.5 | 0 | 0.0 | V-0 |

| | | | | | | | | | |
|---|---|---|---|---|---|---|---|---|---|
| *NR = no rating; meaning: burns and cannot be classified as V-2, V-1, or V-0). | | | | | | | | | |

### Examples 8-9 and Comparative Examples M-O

In order to illustrate the effect of the synergist concentration on the colouration of polymers, compositions were prepared comprising polypropylene coloured with Hostatint Blue and different amounts of Sb₂O₃ and Perkadox® 30 (see Table 2).

Addition of 2 phr Sb₂O₃ resulted in a change of colour from dark blue to light blue. Addition of 1 wt% Px30 and 0.25 or 0.5 wt% Sb₂O₃ also resulted in a change of colour, but far less significant than the addition of 2 phr Sb₂O₃. Addition of FR930 did not affect the color of the compound.

The pigment did not affect the UL94 classification (see Table 2).

**Table 2**

| Example | M | N | O | 8 | 9 |
|---|---|---|---|---|---|
| FR930 | 0 | 4 | 4 | 4 | 4 |
| Perkadox 30 | -- | -- | -- | 1 | 1 |
| Sb₂O₃ | -- | -- | 2 | 0.25 | 0.5 |
| Hostatint Blue | 0.25 | 0.25 | 0.25 | 0.25 | 0.25 |
| Burn to clamp | y | y | n | n | n |
| Cotton ignition | y | y | n | n | n |
| Av. flam. time per sample (sec) | >50 | >50 | 0 | 0 | 0 |
| Total flaming time (sec) | >300 | >300 | 0 | 0 | 0 |
| UL 94 rating | NR | NR | V-0 | V-0 | V-0 |

## Claims

1. Composition comprising at least one polyolefin, a brominated flame retardant selected from the group consisting of tetrabromobisphenol A bis (2,3-dibromopropyl ether), hexabromocyclododecane, poly(pentabromobenzyl acrylate), decabromodiphenyl oxide, tris (tribromophenyl) cyanurate, tris-dibromopropyl isocyanurate, and mixtures thereof, a free radical initiator selected from the group consisting of organic peroxides and C-C initiators, and more than 0.1 phr to not more than 0.5 phr of a synergist selected from the group consisting of antimony compounds, tin compounds, molybdenum compounds, zirconium compounds, boron compounds, zinc compounds, and mixtures thereof

2. Composition according to claim 1 wherein the synergist is Sb₂O₃.

3. A composition according to either of the preceding claims wherein the brominated flame retardant is present in an amount of 2-8 phr.

4. A composition according to any one of the preceding claims wherein the free radical initiator is present in an amount of 0.05-2 phr.

5. A composition according to any one of the preceding claims wherein the polyolefin is polypropylene.

6. A composition according to any one of the preceding claims wherein the free radical initiator is 2,3-dimethyl-2,3-diphenyl-butane.

7. A composition according to any one of claims 1-6 which is rated V-0 in the UL 94 flammability test.

## Patentansprüche

1. Zusammensetzung, umfassend wenigstens ein Polyolefin, ein bromiertes Flammschutzmittel, das aus der Gruppe ausgewählt ist, die aus Tetrabrombisphenol-A-bis(2,3-dibrompropylether), Hexabromcyclododecan, Poly(pentabrombenzylacrylat), Decabromdiphenyloxid, Tris(tribromphenyl)-cyanurat, Tris(dibrompropyl)isocyanurat und Gemischen davon besteht, einen Radikalstarter, der aus der Gruppe ausgewählt ist, die aus organischen Peroxiden und C-C-Startern besteht, und mehr als 0,1 phr bis nicht mehr als 0,5 phr eines Synergisten, der aus der Gruppe ausgewählt ist, die aus Antimonverbindungen, Zinnverbindungen, Molybdänverbindungen, Zirconiumverbindungen, Borverbindungen, Zinkverbindungen und Gemischen davon besteht.

2. Zusammensetzung gemäß Anspruch 1, wobei es sich bei dem Synergisten um Sb₂O₃ handelt.

3. Zusammensetzung gemäß einem der vorstehenden Ansprüche, wobei das bromierte Flammschutzmittel in einer Menge von 2-8 phr vorhanden ist.

4. Zusammensetzung gemäß einem der vorstehenden Ansprüche, wobei der Radikalstarter in einer Menge von 0,05-2 phr vorhanden ist.

5. Zusammensetzung gemäß einem der vorstehenden Ansprüche, wobei es sich bei dem Polyolefin um Polypropylen handelt.

6. Zusammensetzung gemäß einem der vorstehenden Ansprüche, wobei es sich bei dem Radikalstarter um 2,3-Dimethyl-2,3-diphenylbutan handelt.

7. Zusammensetzung gemäß einem der Ansprüche 1 bis 6, die in der UL-94-Brandprüfung mit V-0 bewertet wird.

## Revendications

1. Composition comprenant au moins une polyoléfine, un retardateur d'inflammation bromé choisi dans le groupe constitué par l'éther bis(2,3-dibromopropylique) de tétrabromo-bisphénol A, l'hexabromocyclododécane, le poly(acrylate de pentabromo-benzyle), l'oxyde de décabromodiphényle, le cyanurate de tris(tribromophényle), l'isocyanurate de tris-dibromopropyle, et leurs mélanges, un amorceur radicalaire choisi dans le groupe constitué par les peroxydes organiques et les amorceurs C-C, et de plus de 0,1 phr à au plus 0,5 phr d'un agent de synergie choisi dans le groupe constitué par les composés de l'antimoine, les composés de l'étain, les composés du molybdène, les composés du zirconium, les composés du bore, les composés du zinc, et leurs mélanges.

2. Composition selon la revendication 1, dans laquelle l'agent de synergie est Sb₂O₃.

3. Composition selon l'une ou l'autre des revendications précédentes, dans laquelle le retardateur d'inflammation bromé est présent en une quantité de 2 à 8 phr.

4. Composition selon l'une quelconque des revendications précédentes, dans laquelle l'amorceur radicalaire est présent en une quantité de 0,05 à 2 phr.

5. Composition selon l'une quelconque des revendications précédentes, dans laquelle la polyoléfine est le polypropylène.

6. Composition selon l'une quelconque des revendications précédentes, dans laquelle l'amorceur radicalaire est le 2,3-diméthyl-2,3-diphénylbutane.

7. Composition selon l'une quelconque des revendications 1 à 6, qui est notée V-0 dans le test d'inflammabilité UL 94.
